# EUROPÄISCHE PATENTSCHRIFT

(11) **EP 1 607 248 B1**
(45) Veröffentlichungstag und Bekanntmachung des Hinweises auf die Patenterteilung: **28.05.2008**
(21) Anmeldenummer: 05104646.4
(22) Anmeldetag: 31.05.2005
(51) Int. Cl.: B60D 1/58, G01G 19/08

(54) **Vorrichtung zur Erfassung einer Stützlast**
A load-detecting device
Dispositif de détection de charge

(30) Priorität: 17.06.2004 DE 102004029295
(43) Veröffentlichungstag der Anmeldung: 21.12.2005
(73) Patentinhaber: Deere & Company, Moline, IL 61265-8098 (US)
(72) Erfinder: Viaud, Jean, 70100 Gray (FR)
(74) Vertreter: Holst, Sönke

(56) Entgegenhaltungen:
- DE-A1- 10 154 733
- DE-U1- 20 108 302
- FR-A- 2 687 622
- US-A- 3 650 340
- US-A- 3 700 053

## Beschreibung

Die Erfindung betrifft eine Vorrichtung zur Erfassung der Stützlast, mit der eine Deichsel eines Anhängefahrzeugs auf ein Zugfahrzeug einwirkt, nach den Oberbegriffen der Ansprüche 1 und 2.

Im Rahmen der Präzisionslandwirtschaft besteht ein Bedarf daran, das Gewicht oder die Masse der Ladungen von Anhängefahrzeugen zu erfassen. Bei der Ladung kann es sich um Erntegut handeln, das auf dem Anhängefahrzeug abgelegt wird, beispielsweise bei einem Anhängefahrzeug in Form eines Transportanhängers während der Ernte von Rüben oder Futter, oder das im Anhängefahrzeug zu Ballen gepresst wird, beispielsweise in einem Anhängefahrzeug in Form einer Ballenpresse bei der Ernte von Heu, Stroh oder Silage. Anhand der in bestimmten Zeitabständen georeferenziert aufgezeichneten Gewichtswerte kann eine positionsspezifische Ertragskarte erstellt werden.

Da hierbei die sukzessiven Gewichtsänderungen von zumindest dem selben Interesse sind wie die kumulierte Gesamtmasse, ist bei der Gewichtserfassung eine möglichst hohe Präzision wünschenswert.

Im Stand der Technik sind verschiedene Einrichtungen zur Messung der Masse der Beladung von Anhängefahrzeugen bekannt. In der WO 97/09592 A wird vorgeschlagen, zwischen der Ladefläche eines Transportanhängers und seinem Fahrgestell mehrere Messzellen anzubringen. Analog wird in der DE 199 06 611 A vorgeschlagen, Messzellen zwischen dem Pressraumgehäuse einer Ballenpresse und ihrem Fahrgestell anzuordnen. Eine derartige Anordnung erfordert, dass auch die Deichsel unterhalb der Ladefläche mit dem Fahrgestell zu verbinden ist. Bei Ballenpressen bildet das Pressraumgehäuse allerdings einen Teil des Fahrgestells, so dass derartiger Einbau von Messzellen eine komplette Neukonstruktion des Anhängefahrzeugs, insbesondere der Ballenpresse bedeutet.

In der DE 195 43 343 A wird vorgeschlagen, die an den Achsen und der Zugdeichsel einer Ballenpresse wirkenden Gewichtskräfte zu erfassen. Anhand der Änderung der Kräfte beim Auswerfen eines Ballens wird die Gewichtskraft des hergestellten Ballens berechnet. Die DE 102 45 001 A beschreibt eine analoge Anordnung der Messzellen, jedoch bei einem Fahrzeug zum Ausbringen von Biomasse.

Die in der Zugdeichsel eingebaute Messzelle soll die vertikale Belastung der Zugöse erfassen, d. h. die Stützlast, mit der die Zugdeichsel auf die Kupplung des Zugfahrzeugs einwirkt. Sie ist somit in vertikaler Richtung zwischen der Zugdeichsel und der Zugöse angeordnet. Allerdings kann ihr Ausgangssignal durch horizontale Kräfte beeinflusst werden, die zwischen dem Anhängefahrzeug und dem Zugfahrzeug wirken. Dabei können Messfehler insbesondere durch Verkanten der in vertikaler Richtung relativ zueinander beweglichen Elemente entstehen, falls höhere Brems- oder Zugkräfte wirken.

Die DE 203 13 356 U beschreibt eine Stützvorrichtung für die Anhängerdeichsel eines PKW-Anhängers. Innerhalb eines Rohrs ist eine Feder angeordnet, deren Ausdehnung ein Maß für die Stützlast ist, mit der die Anhängerdeichsel auf ein Stützrad einwirkt. Das obere Ende der Feder ist mit der Anhängerdeichsel verbunden, während ihr unteres Ende über einen Schwingarm mit dem Stützrad verbunden ist. Der Schwingarm ist um eine horizontale, zur Drehachse des Stützrads parallele Achse drehbar gelagert. Dadurch soll ein Verkanten der mit dem Stützrad verbundenen, beweglichen Teile vermieden und die Messgenauigkeit verbessert werden. Hier wird die Stützkraft des Stützrades gemessen. Diese Messeinrichtung eignet sich somit nicht zur Bestimmung der Stützlast oder Auflagekraft, mit der eine Deichsel auf eine Kupplung eines Zugfahrzeugs wirkt.

Die als gattungsbildend angesehene FR 2 687 622 A beschreibt einen einachsigen Wagen, der zur Gewichtserfassung an den Rädern und an der Deichsel mit Sensoren ausgestattet ist. In einer Ausführungsform ist an der Deichsel ein um eine horizontale, quer zur Vorwärtsrichtung schwenkbar angelenkter Arm angebracht, an dessen Vorderseite sich die Zugöse befindet. Zwischen einem hinter der Schwenkachse befindlichen Bereich des in sich geraden Arms und der Deichsel ist ein Sensor zur Erfassung der Gewichtsbelastung der Deichsel angeordnet. Die Schwenkachse und die Zugöse befinden sich etwa in derselben Höhe.

Die ebenfalls gattungsgemäße DE 101 54 733 A beschreibt eine ähnliche Anordnung. Ein einachsiger Wagen ist zur Gewichtserfassung an den Rädern und an der Deichsel mit Sensoren ausgestattet. An der Deichsel ist ein um eine horizontale, quer zur Vorwärtsrichtung schwenkbar angelenktes Kipphebelelement angebracht, an dessen Vorderseite sich die Zugöse befindet. Zwischen einem hinter und oberhalb der Schwenkachse befindlichen Bereich des Kipphebels und der Deichsel ist ein Sensor zur Erfassung der Gewichtsbelastung der Deichsel angeordnet. Die Schwenkachse und die Zugöse, die gegenüber der Kupplung des Zugfahrzeugs in horizontaler Richtung schwenkbar gelagert ist, befinden sich etwa in derselben Höhe.

Das der Erfindung zu Grunde liegende Problem wird darin gesehen, eine einfache und zuverlässige Messeinrichtung zur Erfassung der Stützlast einer Deichsel eines Transportfahrzeugs für Erntegut auf eine Kupplung eines Zugfahrzeugs bereitzustellen, bei der die Messgenauigkeit vergrößert ist.

Dieses Problem wird erfindungsgemäß durch die Lehre der Patentansprüche 1 und 2 gelöst, wobei in den weiteren Patentansprüchen Merkmale aufgeführt sind, die die Lösung in vorteilhafter Weise weiterentwickeln.

Eine zwischen einem Zugfahrzeug und der Deichsel eines Anhängefahrzeugs angeordnete Kupplungseinrichtung umfasst ein erstes und ein zweites Kupplungselement, die trennbar untereinander verbindbar sind. Das Zugfahrzeug ist mit dem zweiten Kupplungselement versehen, während das erste Kupplungselement schwenkbar an der Deichsel des Anhängefahrzeugs angelenkt ist und sich auch der Sensor im vertikalen Kraftfluss zwischen der Deichsel und dem ersten Kupplungselement befindet. Der Sensor befindet sich am Anhängefahrzeug. Der Sensor zur Erfassung der Stützlast, die das Anhängefahrzeug auf das Zugfahrzeug überträgt, ist zwischen dem ersten Kupplungselement und der Deichsel angeordnet und erfasst im Betrieb die dort wirkende, vertikale Kraftkomponente. Um die Messgenauigkeit zu verbessern und insbesondere, um Verfälschungen durch ein Verkanten der dem Sensor benachbarten Elemente zur Übertragung der horizontalen Kräfte und daraus resultierende Verfälschungen der Messwerte zu vermeiden, ist das erste Kupplungselement um eine horizontal und quer zur Vorwärtsrichtung des Zug- und Anhängefahrzeugs verlaufende Schwenkachse schwenkbar an der Deichsel angelenkt. Das erste Kupplungselement ist um eine parallel zur genannten Schwenkachse verlaufende Achse schwenkbar am zweiten Kupplungselement anbringbar. Die Achse und die Schwenkachse liegen in einer gemeinsamen horizontalen Ebene (oder einer gemeinsamen Ebene, in der sich die zu erwartenden Zug- oder Bremskräfte erstrecken), zumindest dann, wenn das Zugfahrzeug mit einer zu erwartenden Ladung beladen ist. In dem Bereich der zu erwartenden Beladungen bewegt sich das erste Kupplungselement vorzugsweise nur geringfügig, damit die Schwenkachse und die Achse in derselben horizontalen Ebene verbleiben. Der Sensor kann im Abstand von der Schwenkachse angebracht werden. Es ist vorgesehen, dass zwischen dem Sensor und der Deichsel ein Element angebracht ist, das sich zwischen zwei einen Spielraum freilassenden, oberen und unteren Anschlägen befindet, die ein geringes vertikales Spiel ermöglichen. Das Element befindet sich vorzugsweise bei leerem Anhängefahrzeug innerhalb des Spielraums zwischen den Anschlägen, während es bei beladenem Anhängefahrzeug an einem der Anschläge anliegt. Das erste Kupplungselement ist mit dem Sensor versehen.

Alternativ zur Lehre des Anspruchs 1 befindet sich der Sensor am Anhängefahrzeug. Dann ist das Zugfahrzeug mit dem zweiten Kupplungselement versehen, während das erste Kupplungselement schwenkbar an der Deichsel des Anhängefahrzeugs angelenkt ist und sich auch der Sensor im vertikalen Kraftfluss zwischen der Deichsel und dem ersten Kupplungselement befindet. Die übrigen Merkmale entsprechen der Lehre des Anspruchs 1.

Das erste Kupplungselement kann sich in der Art einer Wippe in Vorwärtsrichtung vor und hinter der Schwenkachse erstrecken. Auf einer Seite der Schwenkachse ist es mit dem zweiten Kupplungselement verbindbar. Auf der anderen Seite der Schwenkachse kann der Sensor angeordnet sein. Durch geeignete Wahl der Hebelarme kann eine Übersetzung der Kräfte stattfinden, um den zu erwartenden Kräftebereich an den jeweils verwendeten Sensor anzupassen. Der Sensor könnte aber bei anderen Ausführungsformen auf derselben Seite der Schwenkachse angeordnet sein, auf der auch das zweite Kupplungselement liegt.

Der Sensor kann innerhalb des ersten Kupplungselements angeordnet sein, d. h. darin integriert werden, so dass er die vertikale Stützlast des Anhängefahrzeugs erfasst. Hier kommt insbesondere ein an sich bekannter Lastzellenzusammenbau infrage, der in vertikaler Richtung zwischen dem ersten Kupplungselement und dem Element angeordnet ist. Der Sensor kann auch als außen am ersten Kupplungselement angebrachter Dehnungsmessstreifen gestaltet werden, um eine durch die Stützlast des Anhängefahrzeugs bedingte Verformung des ersten Kupplungselements zu erfassen.

Wie oben dargelegt, ist ein gewisser Schwenkbereich zwischen dem ersten und dem zweiten Kupplungselement um die horizontale und quer zur Vorwärtsrichtung verlaufende Achse wünschenswert. Er kann durch eine Kugelkopfkupplung realisiert werden. Denkbar wäre auch eine Kombination aus einer Maulkupplung mit einer Zugöse, die mit einem hinreichenden Spiel versehen ist, um die Schwenkbewegung um die genannte Achse zu ermöglichen. Alternativ oder zusätzlich kann zur Erzielung oder Vergrößerung des Schwenkbereichs ein entsprechendes Gelenk in das erste Kupplungselement eingebaut werden.

Die beschriebene Vorrichtung eignet sich insbesondere dazu, die Stützlast eines Anhängefahrzeugs zum Transport oder Aufnehmen von Erntegut zu erfassen, beispielsweise einer Ballenpresse oder eines Ladewagens. Werden auch die Achslasten des Anhängefahrzeugs erfasst, kann durch georeferenzierte Aufzeichnung der Messwerte der Sensoren für die Stützlast und die Achslasten eine Ertragskartierung des aufgenommenen Ernteguts durchgeführt werden.

In den Zeichnungen sind zwei nachfolgend näher beschriebene Ausführungsbeispiele der Erfindung dargestellt. Es zeigt:
- Fig. 1: eine seitliche Ansicht eines Zugfahrzeugs in Form eines Traktors und eines Anhängefahrzeugs in Form einer Ballenpresse,
- Fig. 2: eine Draufsicht auf die Deichsel des Anhängefahrzeugs und die Zugstange des Zugfahrzeugs,
- Fig. 3: eine Seitenansicht der Deichsel des Anhängefahrzeugs und der Zugstange des Zugfahrzeugs sowie einen Sensor zur Erfassung der Stützlast, und
- Fig. 4: eine Seitenansicht einer anderen, nicht unter den Anspruch 1 fallenden Ausführungsform der Deichsel des Anhängefahrzeugs und der Zugstange des Zugfahrzeugs mit einem Sensor zur Erfassung der Stützlast.

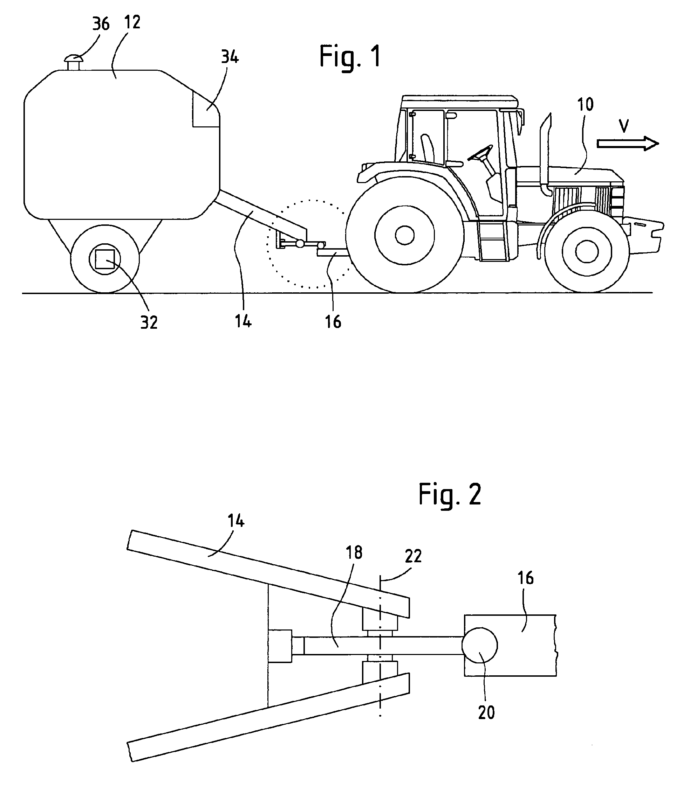

Die Figur 1 zeigt eine Seitenansicht eines Zugfahrzeugs 10 in Form eines Traktors und einem davon gezogenen Anhängefahrzeug 12 in Form einer Ballenpresse. Anstelle der dargestellten Rundballenpresse könnte auch eine Quaderballenpresse, ein Ladewagen, ein Transportanhänger für Erntegut oder ein beliebiger anderer Anhänger, wie ein Transportwagen für Boote oder Geräte oder ein Wohnwagen durch das Zugfahrzeug 10 gezogen werden. Auch als Zugfahrzeug 10 kommen beliebige Ausführungsformen infrage.

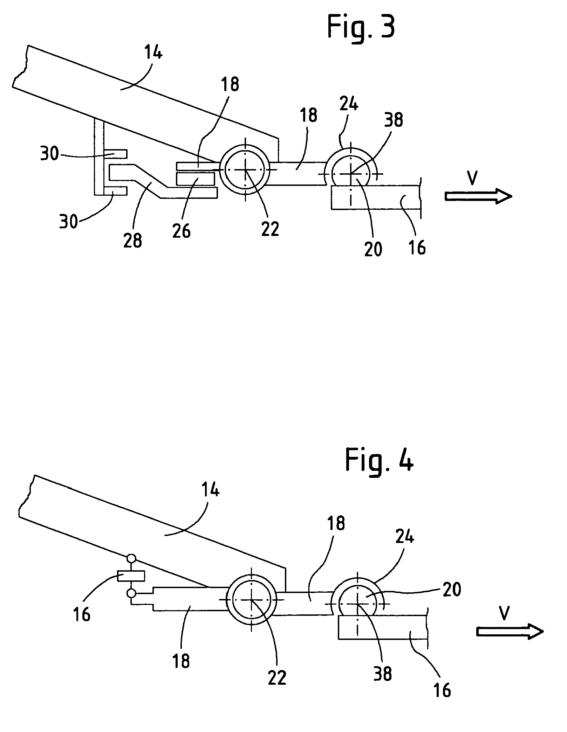

Die Figuren 2 und 3 zeigen die Deichsel 14 des Anhängefahrzeugs und die Zugstange 16 des Zugfahrzeugs 10 sowie die dazwischen angeordneten Kupplungselemente zur lösbaren Verbindung der Deichsel 14 und der Zugstange 16 in Draufsicht (Figur 2) und Seitenansicht (Figur 4). Die Kupplungselemente umfassen ein erstes Kupplungselement 18 und ein zweites Kupplungselement 20. Das erste Kupplungselement 18 ist etwa in seiner Mitte um eine horizontal und quer zur Vorwärtsrichtung V verlaufende Schwenkachse 22 schwenkbar an der Deichsel 14 angelenkt. An seinem in Vorwärtsrichtung V vorderen Ende weist das erste Kupplungselement 18 eine Kugelschale 24 auf, die das kugelförmige zweite Kupplungselement 20, welches mit der Zugstange 16 fest verbunden ist, umschließt. Das erste Kupplungselement 18 ist vom zweiten Kupplungselement 20 abnehmbar, um die Kupplungsverbindung trennen und das Anhängefahrzeug 12 vom Zugfahrzeug 10 lösen zu können. Die Kugelschale 24 und das kugelförmige zweite Kupplungselement 20 erlauben ein Verschwenken des ersten Kupplungselementes 18 um eine Achse 38, die durch die Mitte der Kugel 20 und parallel zur Schwenkachse 22 verläuft. Anstelle der dargestellten Kugelkopfkupplung kann jede beliebige andere Art von Kupplung verwendet werden, insbesondere Kombinationen aus anhängefahrzeugseitigen Zugösen und zu ihrer Aufnahme geeignete zugfahrzeugseitigen Maulkupplungen.

Bezüglich der Vorwärtsrichtung V hinter der Schwenkachse 22 ist das erste Kupplungselement 18 mit einem Sensor 26 in Form einer Kraftmesszelle oder eines Dehnungsmessstreifens versehen. An der anderen Fläche des Sensors 26 ist ein Element 28 angebracht, das sich zwischen zwei mit der Deichsel 14 verbundenen Anschlägen 30 erstreckt. Falls die Stützlast des Anhängefahrzeugs 12 etwa null ist, befindet sich das Element 28 in der Mitte zwischen den Anschlägen 30, während es bei nach unten gerichteten Stützlasten am unteren Anschlag 30 anliegt. Zieht die Deichsel 14 die Zugstange 16 nach oben, liegt das Element 28 am oberen Anschlag 30 an.

Beim Betrieb erfasst der Sensor 24 die vertikale Stützlast, die die Deichsel 14 auf die Zugstange 16 ausübt. Horizontale Zugkräfte werden durch das Schwenklager mit der Schwenkachse 22 aufgenommen und verfälschen das Messergebnis nicht. Da die Achse 38 und die Schwenkachse 22 in derselben horizontalen Ebene liegen, werden Zug- oder Bremskräfte auch nicht in vertikale Bewegungen des ersten Kupplungselements 18 umgesetzt, die das Messergebnis des Sensors 24 verfälschen würden.

Bei einer anderen möglichen Ausführungsform ist das Element 18 mit dem ersten Kupplungselement 18 einteilig ausgeführt und ein Dehnungsmessstreifen als Sensor 26 erfasst die durch die Stützlast bedingte Verformung des ersten Kupplungselements 18.

Bei der Ausführungsform nach Figur 4, in der mit der ersten Ausführungsform übereinstimmende Elemente mit denselben Bezugszeichen gekennzeichnet sind, ist der Sensor 26 direkt zwischen der Deichsel 14 und dem ersten Kupplungselement 18 angeordnet. Übt die Deichsel 14 eine Stützkraft auf das Kupplungselement 18 aus, wird der Sensor 26 auf Zug beansprucht.

Das Anhängefahrzeug 12 ist mit Sensoren 32 zur Erfassung der Achslast, einer GPS-Antenne 36 zur Positionserfassung und einem Rechner 34 mit einer Übertragungs- und/oder Speichereinrichtung ausgestattet. Der Rechner 34 zeichnet die Werte der Sensoren 26 und 32 während des Betriebs auf oder überträgt sie an eine beabstandete Stelle, um Ertragskarten zu erstellen. Der Rechner 34 und/oder die GPS-Antenne 36 können sich auch auf dem Zugfahrzeug 10 befinden.

## Patentansprüche

1. Vorrichtung zur Erfassung der Stützlast, mit der eine Deichsel (14) eines Anhängefahrzeugs (12) auf ein Zugfahrzeug (10) einwirkt, mit einem ersten Kupplungselement (18), einem zweiten Kupplungselement (20), das lösbar mit dem ersten Kupplungselement (18) verbindbar ist, und einem Sensor (26), der zwischen der Deichsel (14) und dem ersten Kupplungselement (18) angeordnet ist und eingerichtet ist, die zwischen der Deichsel (14) und dem ersten Kupplungselement (18) wirkende vertikale Kraftkomponente zu erfassen, wobei das erste Kupplungselement (18) um eine horizontal und quer zur Vorwärtsrichtung verlaufende Schwenkachse (22) schwenkbar an der Deichsel (14) gelagert und um eine parallel zur Schwenkachse (22) verlaufende Achse (38) beweglich mit dem zweiten Kupplungselement (20) verbindbar ist und die Schwenkachse (22) und die Achse (38) zumindest näherungsweise in derselben horizontalen Ebene liegen, **dadurch gekennzeichnet, dass** das erste Kupplungselement (18) durch ein Element (28) mit der Deichsel (14) verbunden ist, das sich zwischen zwei Anschlägen (30) befindet, zwischen denen ein vertikales Spiel möglich ist, und dass das erste Kupplungselement (18) mit dem Sensor (26) versehen ist.

2. Vorrichtung zur Erfassung der Stützlast, mit der eine Deichsel (14) eines Anhängefahrzeugs (12) auf ein Zugfahrzeug (10) einwirkt, mit einem ersten Kupplungselement (18), einem zweiten Kupplungselement (20), das lösbar mit dem ersten Kupplungselement (18) verbindbar ist, und einem Sensor (26), der zwischen dem Zugfahrzeug (10) und dem ersten Kupplungselement (18) angeordnet ist und eingerichtet ist, die zwischen dem Zugfahrzeug (10) und dem ersten Kupplungselement (18) wirkende vertikale Kraftkomponente zu erfassen, wobei das erste Kupplungselement (18) um eine horizontal und quer zur Vorwärtsrichtung verlaufende Schwenkachse (22) schwenkbar an dem Zugfahrzeug (10) gelagert und um eine parallel zur Schwenkachse (22) verlaufende Achse (38) beweglich mit dem zweiten Kupplungselement (20) verbindbar ist und die Schwenkachse (22) und die Achse (38) zumindest näherungsweise in derselben horizontalen Ebene liegen, **dadurch gekennzeichnet, dass** das erste Kupplungselement (18) durch ein Element (28) mit dem Zugfahrzeug (10) verbunden ist, das sich zwischen zwei Anschlägen (30) befindet, zwischen denen ein vertikales Spiel möglich ist, und dass das erste Kupplungselement (18) mit dem Sensor (26) versehen ist.

3. Vorrichtung nach Anspruch 1 oder 2, **dadurch gekennzeichnet, dass** sich das erste Kupplungselement (18) wippenartig vor und hinter der Schwenkachse (22) erstreckt.

4. Vorrichtung nach Anspruch 3, **dadurch gekennzeichnet, dass** der Sensor (26) auf der vom zweiten Kupplungselement (20) beabstandeten Seite des ersten Kupplungselements (18) angeordnet ist.

5. Vorrichtung nach einem der vorhergehenden Ansprüche, **dadurch gekennzeichnet, dass** der Sensor (26) innerhalb des ersten Kupplungselements (18) angeordnet ist.

6. Vorrichtung nach einem der vorhergehenden Ansprüche, **dadurch gekennzeichnet, dass** das erste Kupplungselement (18) durch eine Kugelkopfkupplung mit dem zweiten Kupplungselement (20) verbunden ist.

7. Kombination aus einem Zugfahrzeug (10), einem Anhängefahrzeug (12), insbesondere einem Anhängefahrzeug zur Aufnahme und/oder zum Transport von Erntegut, beispielsweise einer Ballenpresse oder einem Ladewagen, und einer Vorrichtung nach einem der vorhergehenden Ansprüche.

8. Kombination nach Anspruch 7, **gekennzeichnet durch** Sensoren (32) zur Erfassung der Achslast des Anhängefahrzeugs (12) und Mittel (34, 36) zur georeferenzierten Aufzeichnung der Messwerte der Sensoren (26, 32) für die Achs- und Stützlast.

## Claims

1. Device for detecting the drawbar load with which a drawbar (14) of a trailer vehicle (12) acts on a tractor vehicle (10), with a first coupling element (18), a second coupling element (20) which can be connected releasably to the first coupling element (18), and a sensor (26) which is arranged between the drawbar (14) and the first coupling element (18) and is set up so as to detect the vertical force component acting between the drawbar (14) and the first coupling element (18), wherein the first coupling element (18) is mounted on the drawbar (14) in a manner such that it can pivot about a pivot axis (22) running horizontally and transversely with respect to the forwards direction, and can be connected to the second coupling element (20) in a manner such that it is movable about an axis (38) running parallel to the pivot axis (22), and the pivot axis (22) and the axis (38) lie at least approximately in the same horizontal plane, **characterized in that** the first coupling element (18) is connected to the drawbar (14) by an element (28) which is located between two stops (30) between which a vertical play is possible, and **in that** the first coupling element (18) is provided with the sensor (26).

2. Device for detecting the drawbar load with which a drawbar (14) of a trailer vehicle (12) acts on a tractor vehicle (10), with a first coupling element (18), a second coupling element (20) which can be connected releasably to the first coupling element (18), and a sensor (26) which is arranged between the tractor vehicle (10) and the first coupling element (18) and is set up so as to detect the vertical force component acting between the tractor vehicle (10) and the first coupling element (18), wherein the first coupling element (18) is mounted on the tractor vehicle (10) in a manner such that it can pivot about a pivot axis (22) running horizontally and transversely with respect to the forwards direction, and can be connected to the second coupling element (20) in a manner such that it is movable about an axis (38) running parallel to the pivot axis (22), and the pivot axis (22) and the axis (38) lie at least approximately in the same horizontal plane, **characterized in that** the first coupling element (18) is connected to the tractor vehicle (10) by an element (28) which is located between two stops (30) between which a vertical play is possible, and **in that** the first coupling element (18) is provided with the sensor (26).

3. Device according to Claim 1 or 2, **characterized in that** the first coupling element (18) extends in a rocker-like manner in front of and behind the pivot axis (22).

4. Device according to Claim 3, **characterized in that** the sensor (26) is arranged on that side of the first coupling element (18) which is spaced apart from the second coupling element (20).

5. Device according to one of the preceding claims, **characterized in that** the sensor (26) is arranged within the first coupling element (18).

6. Device according to one of the preceding claims, **characterized in that** the first coupling element (18) is connected to the second coupling element (20) by a ball-headed coupling.

7. Combination of a tractor vehicle (10), a trailer vehicle (12), in particular a trailer vehicle for picking up and/or for transporting harvested crop, for example a baler or a self-loading forage box, and a device according to one of the preceding claims.

8. Combination according to Claim 7, **characterized by** sensors (32) for detecting the axle load of the trailer vehicle (12) and means (34, 36) for the geo-referenced recording of the measured values of the sensors (26, 32) for the axle and drawbar load.

## Revendications

1. Dispositif de détection de la charge de support, par lequel une barre d'attelage (14) d'un véhicule semi-porté (12) agit sur un véhicule tracteur (10), comportant un premier élément de couplage (18), un deuxième élément de couplage (20) qui peut être assemblé de manière amovible au premier élément de couplage (18), et un capteur (26) qui est disposé entre la barre d'attelage (14) et le premier élément de couplage (18) et qui est conçu pour détecter les composantes de force verticales agissant entre la barre d'attelage (14) et le premier élément de couplage (18), ledit premier élément de couplage (18) étant monté sur la barre d'attelage (14) de manière à pouvoir pivoter autour d'un axe de pivotement (22), orienté horizontalement et transversalement à la direction d'avance, et pouvant être assemblé au deuxième élément de couplage (20) de manière mobile autour d'un axe (38) parallèle à l'axe de pivotement (22), et l'axe de pivotement (22) et l'axe (38) étant situés au moins à peu près dans le même plan horizontal, **caractérisé en ce que** le premier élément de couplage (18) est assemblé à la barre d'attelage (14) par l'intermédiaire d'un élément (28) qui est disposé entre deux butées (30), entre lesquelles un jeu vertical est possible, et **en ce que** le premier élément de couplage (18) est muni du capteur (26).

2. Dispositif de détection de la charge de support, par lequel une barre d'attelage (14) d'un véhicule semi-porté (12) agit sur un véhicule tracteur (10), comportant un premier élément de couplage (18), un deuxième élément de couplage (20) qui peut être assemblé de manière amovible au premier élément de couplage (18), et un capteur (26) qui est disposé entre le véhicule tracteur (10) et le premier élément de couplage (18) et qui est conçu pour détecter les composantes de force verticales agissant entre le véhicule tracteur (10) et le premier élément de couplage (18), ledit premier élément de couplage (18) étant monté sur le véhicule tracteur (10) de manière à pouvoir pivoter autour d'un axe de pivotement (22), orienté horizontalement et transversalement à la direction d'avance, et pouvant être assemblé au deuxième élément de couplage (20) de manière mobile autour d'un axe (38) parallèle à l'axe de pivotement (22), et l'axe de pivotement (22) et l'axe (38) étant situés au moins à peu près dans le même plan horizontal, **caractérisé en ce que** le premier élément de couplage (18) est assemblé au véhicule tracteur (10) par l'intermédiaire d'un élément (28) qui est disposé entre deux butées (30), entre lesquelles un jeu vertical est possible, et **en ce que** le premier élément de couplage (18) est muni du capteur (26).

3. Dispositif selon la revendication 1 ou 2, **caractérisé en ce que** le premier élément de couplage (18) s'étend à la manière d'une bascule devant et derrière l'axe de pivotement (22).

4. Dispositif selon la revendication 3, **caractérisé en ce que** le capteur (26) est disposé sur le premier élément de couplage (18), sur le coté éloigné du deuxième élément de couplage (20).

5. Dispositif selon l'une quelconque des revendications précédentes, **caractérisé en ce que** le capteur (26) est disposé à l'intérieur du premier élément de couplage (18).

6. Dispositif selon l'une quelconque des revendications précédentes, **caractérisé en ce que** le premier élément de couplage (18) est relié au deuxième élément de couplage (20) par l'intermédiaire d'un couplage à tête sphérique.

7. Combinaison formée par un véhicule tracteur (10), un véhicule semi-porté (12), en particulier un véhicule semi-porté destiné à recevoir et/ou à transporter des végétaux, tel qu'une presse à balles ou un véhicule de chargement, et un dispositif selon l'une quelconque des revendications précédentes.

8. Combinaison selon la revendication 7, **caractérisée par** des capteurs (32), destinés à détecter la charge de l'essieu du véhicule semi-porté (12), et des moyens (34, 36) pour l'enregistrement géoréférencé des valeurs de mesure des capteurs (26, 32) pour la charge d'essieu et la charge de support.
